# EUROPÄISCHE PATENTSCHRIFT

(11) **EP 1 167 286 B1**
(45) Veröffentlichungstag und Bekanntmachung des Hinweises auf die Patenterteilung: **07.06.2006**
(21) Anmeldenummer: 01113635.5
(22) Anmeldetag: 18.06.2001
(51) Int. Cl.: C01B 7/19

(54) **Verfahren zur Herstellung von Fluorwasserstoff in einem Drehrohrofen**
Process for the production of hydrogen fluoride in a rotating kiln
Procédé de production de fluorure d'hydrogène dans un four rotatif

(30) Priorität: 28.06.2000 DE 10031562
(43) Veröffentlichungstag der Anmeldung: 02.01.2002
(73) Patentinhaber: LANXESS Deutschland GmbH, 51369 Leverkusen (DE)
(72) Erfinder: Bulan, Andreas, 40764 Langenfeld (DE); Esch, Klaus, 51371 Leverkusen (DE); Strabel, Peter, 45277 Essen (DE)

(56) Entgegenhaltungen:
- EP-A- 0 299 306
- CH-A- 659 646
- US-A- 1 812 770
- US-A- 2 932 557
- US-A- 3 102 787

## Beschreibung

Die Erfindung betrifft ein neues Verfahren zur Herstellung von Fluorwasserstoff in einem Drehrohrofen.

Bekanntermaßen erfolgt die Herstellung von Fluorwasserstoff durch Reaktion von Schwefelsäure mit Flussspat wobei als Nebenprodukt Calciumsulfat anfällt. Die Reaktion ist endotherm, daher muss zusätzliche Energie eingetragen werden. Ein Teil der Energie wird über die Edukte eingebracht, so dass diese ein Maximum an latenter Wärme gespeichert haben. Die restliche Energie wird über eine indirekte Beheizung des Reaktors zugeführt. Als Reaktor wird üblicherweise ein Drehrohrofen eingesetzt. Der feste Flussspat wird mit flüssiger Schwefelsäure vermischt, dabei entsteht gasförmiger Fluorwasserstoff und festes Calciumsulfat. Die Umsetzung ist problematisch, da die Reaktionsmischung verschiedene pastöse Phasen durchläuft. Die pastösen Phasen haben die Eigenschaft an der Reaktorwand zu kleben und den Energieeintrag von außen extrem zu behindern. Ein weiteres Problem ist die Stofftransportbehinderung durch das Calciumsulfat, das sich auf der Oberfläche des Calciumfluorids bildet. Diese Stofftransportbehinderung führt zu hoher Verweilzeit und damit niedriger Raum-Zeit-Ausbeute was bei technischem Umsatz nicht tolerierbar ist. Der Stand der Technik beschreibt daher Maßnahmen zur Vermeidung bzw. zur Handhabung der pastösen Phasen und Maßnahmen zur Vermeidung der Stofftransportbehinderung durch das sich bildende Calciumsulfat.

Erstmalig wurde im Jahre 1931 gemäß US-A 1 812 770 Flussspat mit Schwefelsäure im Drehrohrofen umgesetzt. Hierzu wurde das gesamte Drehrohr von einer zentralen Brennkammer aus geheizt. Die Technik der Beheizung des Drehrohrofens mit einer zentralen Brennkammer ist bis heute Stand der Technik.

Die Erhöhung der Raum-Zeit-Ausbeuten wurden mit im Drehrohr eingebauten Mischelementen versucht (vgl. z.B. US-A 1 316 569). Nachteilig an solchen Einbauten ist, dass die Konstruktion des Drehrohres aufwendig ist und die Reinigungsarbeiten deutlich erschwert werden.

Zur Vermeidung der Stofftransportbehinderung und der Bildung von Verkrustungen an der Reaktorwand wurden Eisenkugeln (vgl. US-A 1 665 588) oder Eisenbahnschienen (vgl. US-A 1 748 735) in das Drehrohr gefüllt. Nachteil ist, dass der Werkstoff des Drehrohres zum bereits vorhandenen chemischen Angriff auch einer extrem starken mechanischen Belastung ausgesetzt wird und dadurch die Standzeit vermindert wird.

Zur Verbesserung des Umsatzes und zur besseren Handhabung der pastösen Phase wurde gemäß US-A 2 932 557 ein Mischer eingesetzt, der die Vermischung von Flussspat und Schwefelsäure verbessert. Nachteil derartiger Konstruktionen ist, das kein hohes Temperaturniveau erreicht werden kann und die Raum-Zeit-Ausbeute niedrig bleibt. Zusätzlich zum Mischer wird weiterhin ein Drehrohrofen benötigt.

Gemäß US-A 3 102 787 wird die Schwefelsäure über eine Verteilsystem im Drehrohrofen auf den Flussspat aufgegeben. Damit sollen die pastösen Phasen vermieden werden. Die sonst beobachteten entstehenden Verkrustungen der Reaktorwand mit der damit verbunden Verschlechterung des Wärmeeintrages in den Reaktor sollen vermieden werden. Nachteilig ist das konstruktiv aufwendige - Verteilsystem für Schwefelsäure im Ofen. In Fall von Betriebsstörungen kann es durch von der Reaktorwand abfallende Reaktionsmischung zerstört werden.

Zur Verbesserung des Energieeintrages kann die Reaktion in der Wirbelschicht durchgeführt werden und ein Teil der Energie durch Reaktion von Schwefeltrioxid mit Wasser zu Schwefelsäure gewonnen werden (vgl.US-A 3 102 787). Nachteilig am Betrieb einer Wirbelschicht ist, dass das Produktgas Fluorwasserstoff vom Fluidisierungsgas abgetrennt werden muss. Zusätzlich wird flussspathaltiger Feinstaub aus der Wirbelschicht ausgetragen.

Zur Vermeidung der pastösen Phase kann die Schwefelsäure mit Flussspat in einem zusätzlichen Reaktor so umgesetzt werden, dass eine Mischung entsteht, die die pastöse Phase im Drehrohrofen nicht durchläuft (vgl. DE 2 435 512 A1). Dieses Verfahren erfordert jedoch einen zusätzlichen Reaktor.

Alle Verfahren haben den Nachteil, dass entweder keine hohen Raum-Zeit-Ausbeuten erzielbar sind oder aufgrund der Bildung von Verkrustungen ein inhomogenes festes Reaktionsprodukt aus Calciumsulfat, Calciumfluorid und Schwefelsäure das Drehrohr verlässt. Dabei können im Reaktionsprodukt nicht umgesetzte Edukte in Konzentrationen von bis zu 10 % vorhanden sein und bedeuten den Verlust des relativ teuren Flussspates. Entsprechend befindet sich im Reaktionsprodukt nicht umgesetzte Schwefelsäure, die durch nachträgliche Neutralisation mit Kalk einen zusätzlichen Verfahrensschritt und damit zusätzliche Kosten verursacht.

Es bestand daher die Aufgabe, ein Verfahren zur Verfügung zu stellen, mit dem Fluorwasserstoff bei gleichmäßig hohem Umsatz, mit hoher Raum-Zeit-Ausbeute und minimalem Energieverbrauch herstellbar ist.

Es wurde gefunden, das ein gleichmäßiger Umsatz bei hoher Raum-Zeit-Ausbeute und minimalem Energieverbrauch erreichbar ist, wenn der Drehrohrofen zonenweise mit einzelnen unabhängig voneinander ansteuerbaren Brennern beheizt wird.

Die vorliegende Erfindung betrifft ein Verfahren zur Herstellung von Fluorwasserstoff durch Umsetzung von Flussspat mit Schwefelsäure im Drehrohrofen, dadurch gekennzeichnet, dass der Ofen in Längsrichtung in 3 gleich große Zonen unterteilt ist, wobei die erste Zone das erste Drittel des Ofens mit der Einlassöffnung für die Edukte darstellt, die zweite Zone das Ofenmittelstück und die dritte Zone das letzte Drittel des Ofens mit der Auslassöffnung für die Produkte darstellt, und jede Zone über 1 bis 12 voneinander unabhängigen Brennkammern indirekt beheizt wird, wobei ein Temperaturgefälle zwischen den Zonen besteht, derart, dass die erste Zone die höchste Temperatur und die dritte Zone die geringste Temperatur aufweist.

Es ist auch möglich, den entstandenen Fluorwasserstoff nicht in der dritten Zone sondern bereits in der ersten Zone des Ofens zu entnehmen.

Die Edukte, Schwefelsäure und Flussspat können zuvor auf ein hohes Temperaturniveau aufgeheizt werden. Dabei kann der Flussspat durch direkte Beheizung auf eine Temperatur von beispielsweise 350 bis 450°C erwärmt werden. Die Schwefelsäure wird im Gegenstrom zum heißen, aus dem Ofen entweichenden Fluorwasserstoff geleitet und erwärmt sich dadurch im allgemeinen auf 80 bis 180°C. Die erwärmten Edukte können dann in einer Mischschnecke vermischt werden und gelangen dann in den indirekt beheizten Drehrohrofen. Die Anzahl der Brennkammern richtet sich nach der Länge des Drehrohres. So kann ein Drehrohr mit einer Länge von 20 m und einem Durchmesser von 2,5 m von z.B. 3 bis 15, vorzugsweise 6 bis 12 Brennkammern indirekt beheizt werden. Die indirekte Beheizung erfolgt bevorzugt über Brenner.

Vorzugsweise befinden sich in der ersten Zone des Ofens 1 bis 12 in der zweiten Zone 1 bis 10 und in der dritten Zone 1 bis 6 Brennkammern.

Die Brenner für die Beheizung der Brennkammern können z.B. mit dem Heizmedium Erdgas oder Erdöl betrieben werden. Die Verbrennungsluft kann vorgewärmt werden, z.B. unter Nutzung der Restwärme der Abluftgase der Ofenbeheizung.

Für die endotherme Reaktion von Flussspat und Schwefelsäure wird eine bestimmte Energiemenge benötigt. Nur die Zuführung der aufgrund der Reaktionsgleichung benötigten Energiemenge reicht jedoch nicht für einen vollständigen Umsatz aus. Je nach Wirkungsgrad der Anlage muß eine größere Energiemenge zur Verfügung gestellt werden. Der Wirkungsgrad der Anlage wird z.B. bestimmt von dem Energieinhalt der Edukte, die dem Ofen zugeführt werden, der Güte des Energieeintrags von den heißen Rauchgasen der Brennkammer bzw. der Strahlungswärme aus den Brennkammern über die Ofenwand auf die Reaktionsmischung und der Durchmischung der Reaktionsmischung im Ofen. Der Wirkungsgrad einer Anlage kann erst im Betrieb ermittelt werden. Somit ergibt sich eine Energiemenge, die dem Ofen zugeführt werden muss, um bei einer bestimmten Beschickungsmenge des Ofens einen vollständigen Umsatz zu erzielen. Zur Minimierung dieser Energiemenge wird die Temperatur der einzelnen Brennkammern bevorzugt so geregelt, dass eine maximale Energiemenge am Anfang des Ofens eingebracht werden kann. Dabei wird in der ersten Zone eine Ofenwandtemperatur von 300 bis 600°C, vorzugsweise zwischen 350 und 450°C durch Variation der Heizmediummenge eingestellt. In der zweiten Zone wird eine Ofenwand-Temperatur von 200-450°C vorzugsweise von 250-350°C eingestellt und in der dritten Zone eine Ofenwand-Temperatur von 150-350°C vorzugsweise 200-300°C.

Die Steuerung der Temperatur in den einzelnen Brennkammern kann manuell oder durch ein entsprechendes Computerprogramm erfolgen. Die Gesamtmenge an Energie über das Heizmedium, die über alle Brennkammern zur Verfügung gestellt wird, richtet sich nach der Beschickungsmenge des Ofens. Die Heizmediummenge wird so bemessen, dass ein vollständiger Umsatz erreicht werden kann. Der Flussspatgehalt im Calciumsulfat beträgt dann weniger als 1 Gew.%, der Gehalt an Schwefelsäure weniger als 1,5 Gew.%. Durch Einsatz des erfindungsgemäßen Verfahrens konnte die Ofenkapazität um über 30 % gesteigert oder bei gleicher Kapazität der Energieeinsatz gesenkt werden. Die Bildung von Verkrustungen an der Ofenwand wird vermieden. Weitere Einzelheiten des Verfahrens sind aus den Ansprüchen zu entnehmen.

### Beispiele

### Beispiel 1 Stand der Technik, Normalbetrieb des Ofens

In einem Drehrohrofen wurden 60 kg/min Flussspat und 81,9 kg/min Schwefelsäure (als 100 % ige Schwefelsäure gerechnet) dosiert. Der Flussspat hatte eine Temperatur von ca. 400°C, die Schwefelsäure eine von ca. 120°C. Ein Teil der Schwefelsäure (1/3 der Gesamtmenge) wurde direkt in den Ofen gegeben, der andere Teil (2/3 der Gesamtmenge) mit dem Flussspat kurz vermischt. Der Ofen hatte eine Länge von 20 m und einen Durchmesser von 2,5 m und wurde gleichmäßig beheizt. In unregelmäßigen Zeitabständen musste der vordere Teil des Ofens gereinigt werden, da sich bildende Verkrustungen das Drehrohr langsam zuwachsen ließen. Zur Umsetzung wurden 158 m³/h Erdgas eingesetzt. Im Reaktionsprodukt Calciumsulfat befanden sich 2 bis 5 % Flussspat und 2 bis 5 % Schwefelsäure. Die Konzentration von Flussspat und Schwefelsäure im Reaktionsprodukt Calciumsulfat waren nicht konstant und schwankten. Die Temperatur des Fluorwasserstoffgases am Ofenausgang betrug 214°C, die der festen Reaktionsprodukte betrug 197°C.

### Beispiel 2 Stand der Technik, Einsatz höherer Energiemengen

Der Drehrohrofen wurde wie im Beispiel 1 betrieben, jedoch wurde die Erdgasmenge auf 168 m³/h erhöht. Es konnte keine Erniedrigung der Flussspat- und Schwefelsäurekonzentration im Reaktionsprodukt erzielt werden. Der Mehreinsatz von Energie hatte zur Folge, dass der aus dem Drehrohrofen entweichende Fluorwasserstoff eine um 20°C, das feste Reaktionsprodukt eine um 10°C höhere Temperatur hatte.

### Beispiel 3 Erfindungsgemäßes Verfahren

In einem Drehrohrofen wurden 60 kg/min Flussspat und 81,9 kg/min Schwefelsäure (als 100 % ige Schwefelsäure gerechnet) dosiert. Der Flussspat hatte eine Temperatur von ca. 400°C, die Schwefelsäure eine von ca. 120°C. Ein Teil der Schwefelsäure (1/3 der Gesamtmenge) wurde direkt in den Ofen gegeben, der andere Teil (2/3 der Gesamtmenge) mit dem Flussspat kurz vermischt. Der Ofen hatte eine Länge von 20 m und einen Durchmesser von 2,5 m. Der Ofen wurde in drei Zonen mit je drei Brennkammern unterteilt, wobei die Brennkammern von 1-9 durchnummeriert wurden. Die Ofenwandtemperatur betrug in der ersten Zone des Ofens an der ersten und zweiten Brennkammer ca. 350°C und fiel dann linear bis zur letzten Brennkammer auf ca. 220°C ab. Die Ofenwandtemperatur wurde durch Regelung der Erdgasmenge über die vorhandenen neun Brenner der Brennkammern gesteuert, wobei die Gesamterdgasmenge von 138 m³/h nicht überschritten wurde. Der Gehalt an Flussspat im Reaktionsprodukt betrug 0,5 bis 1,1 Gew.%, der Gehalt an Schwefelsäure 0,5 bis 1,7 Gew. % Die Temperatur des Fluorwasserstoffgases am Ofenausgang betrug 215°C die Temperatur der festen Reaktionsprodukte 214°C.

### Beispiel 4 Erfindungsgemäßes Verfahren

In einem Drehrohrofen wurden 80 kg/min Flussspat und 109 kg/min Schwefelsäure (als 100 % ige Schwefelsäure gerechnet) dosiert. Der Flussspat hatte eine Temperatur von ca. 400°C, die Schwefelsäure eine von ca. 120°C. Ein Teil der Schwefelsäure (1/3 der Gesamtmenge) wurde direkt in den Ofen gegeben, der andere Teil (2/3 der Gesamtmenge) mit dem Flussspat kurz vermischt. Der Ofen hatte eine Länge von 20 m und einen Durchmesser von 2,5 m. Der Ofen wurde in drei Zonen mit je drei Brennkammern unterteilt wobei die Brennkammern von 1-9 durchnummeriert wurden. Die Ofenwandtemperatur betrug in der ersten Zone des Ofens an der ersten und zweiten Brennkammer ca. 370°C und fiel dann linear bis zur letzten Brennkammer auf ca. 210°C ab. Die Ofenwandtemperatur wurde durch Regelung der Erdgasmenge über die vorhandenen neun Brenner gesteuert, wobei die Gesamterdgasmenge von 189 m³/h nicht überschritten wurde. Der Gehalt an Flussspat im Reaktionsprodukt betrug 0,5 bis 1,1 Gew.%, der Gehalt an Schwefelsäure 0,5 bis 1,7 Gew. % Die Temperatur des Fluorwasserstoffgases am Ofenausgang betrug 205°C die Temperatur der festen Reaktionsprodukte 204°C.

## Patentansprüche

1. Verfahren zur Herstellung von Fluorwasserstoff durch Umsetzung von Flussspat mit Schwefelsäure im Drehrohrofen, **dadurch gekennzeichnet, dass** der Ofen in Längsrichtung in 3 gleich große Zonen unterteilt ist, wobei die erste Zone das erste Drittel des Ofens mit der Einlassöffnung für die Edukte darstellt, die zweite Zone das Ofenmittelstück und die dritte Zone das letzte Drittel des Ofens mit der Auslassöffnung für die Produkte darstellt, und jede Zone über 1 bis 12 voneinander unabhängigen Brennkammern indirekt beheizt wird, wobei ein Temperaturgefälle zwischen den Zonen besteht, derart, dass die erste Zone die höchste Temperatur und die dritte Zone die geringste Temperatur aufweist.

2. Verfahren gemäß Anspruch 1 **dadurch gekennzeichnet, dass** die erste Zone über 1-12, die zweite Zone über 1-10 und die dritte Zone über 1-6 Brennkammern verfügt, die über Brenner beheizt werden.

3. Verfahren gemäß wenigstens einem der Ansprüche 1 und 2, **dadurch gekennzeichnet, dass** die erste Zone eine Temperatur von 300 bis 600°C, die zweite Zone eine Temperatur von 200 bis 450°C und die dritte Zone eine Temperatur von 150 bis 350°C, jeweils gemessen an der Ofenwand, aufweist.

4. Verfahren gemäß wenigstens einem der Ansprüche 1 bis 3, **dadurch gekennzeichnet, dass** die Steuerung der Ofenwandtemperatur der einzelnen Zonen durch Veränderung der Heizmediummenge für die Brenner der einzelnen Brennkammern manuell oder durch Computerprogramm erfolgt.

5. Verfahren gemäß wenigstens einem der Ansprüche 1 bis 4, **dadurch gekennzeichnet, dass** der Flussspat auf eine Temperatur von 350 bis 450°C und die Schwefelsäure auf eine Temperatur von 80 bis 180°C erwärmt werden, dann in einer Mischschnecke vermischt und anschließend in den Drehrohrofen eingespeist werden.

6. Verfahren gemäß Anspruch 5, **dadurch gekennzeichnet, dass** 20-100% der Schwefelsäure direkt in die Zone 1 des Ofens gegeben werden.

7. Verfahren gemäß Anspruch 5, **dadurch gekennzeichnet, dass** 30-60% der Schwefelsäure direkt in die Zone 1 des Ofens gegeben werden.

8. Verfahren gemäß wenigstens einem der Ansprüche 1 bis 5, **dadurch gekennzeichnet, dass** die Brenner für die Brennkammern mit Erdgas oder Erdöl betrieben werden.

## Claims

1. Process for preparing hydrogen fluoride by reaction of fluorspar with sulphuric acid in a rotary tube furnace, **characterised in that** the furnace is divided in the longitudinal direction into 3 equal-sized zones, where the first zone represents the first third of the furnace with the inlet opening for the starting materials, the second zone represents the middle section of the furnace and the third zone represents the last third of the furnace with the outlet opening for the products, and each zone is heated indirectly by means of from 1 to 12 independent combustion chambers, with there being a temperature gradient between the zones such that the first zone has the highest temperature and the third zone has the lowest temperature.

2. Process according to Claim 1, **characterised in that** the first zone has 1-12 combustion chambers, the second zone has 1-10 combustion chambers and the third zone has 1-6 combustion chambers, each of which are heated by means of burners.

3. Process according to at least one of Claims 1 and 2, **characterised in that** the first zone has a temperature of from 300 to 600°C, the second zone has a temperature of from 200 to 450°C and the third zone has a temperature of from 150 to 350°C, in each case measured at the furnace wall.

4. Process according to at least one of Claims 1 to 3, **characterised in that** the furnace wall temperature of the individual zones is controlled manually or by means of a computer programme by altering the quantity of fuel supplied to the burners of the individual combustion chambers.

5. Process according to at least one of Claims 1 to 4, **characterised in that** the fluorspar is heated to a temperature of from 350 to 450°C and the sulphuric acid is heated to a temperature of from 80 to 180°C, the fluorspar and sulphuric acid are then mixed in a screw mixer and subsequently fed into the rotary tube furnace.

6. Process according to Claim 5, **characterised in that** 2-100% of the sulphuric acid is introduced directly into zone 1 of the furnace.

7. Process according to Claim 5, **characterised in that** 30-60% of the sulphuric acid is introduced directly into zone 1 of the furnace.

8. Process according to at least one of claims 1 to 5, **characterised in that** the burners of the combustion chambers are operated using natural gas or mineral oil.

## Revendications

1. Procédé en vue de la fabrication de fluorure d'hydrogène par réaction de spath fluor avec l'acide sulfurique dans des fours tubulaires rotatifs, **caractérisé en ce que** le four est subdivisé en direction longitudinale en 3 zones de taille similaire, la première zone représentant le premier tiers du four avec l'ouverture d'admission pour les produits de départ, la deuxième zone représentant la portion médiane du four et la troisième zone représentant le dernier tiers du four avec l'ouverture d'évacuation pour les produits, et chaque zone étant chauffée de manière indirecte par l'intermédiaire de 1 à 12 chambres de combustion indépendantes les unes des autres, un gradient de température existant entre les zones, de telle sorte que la première zone présente la température la plus élevée et que la troisième zone présente la température la plus faible.

2. Procédé selon la revendication 1, **caractérisé en ce que** la première zone dispose de 1-12, la deuxième zone de 1-10 et la troisième zone de 1-6 chambres de combustion, qui sont chauffées à l'aide de brûleurs.

3. Procédé selon au moins l'une des revendications 1 et 2, **caractérisé en ce que** la première zone présente une température de 300 à 600°C, la deuxième zone une température de 200 à 450°C et la troisième zone une température de 150 à 350°C, mesurée, à chaque fois, à la paroi du four.

4. Procédé selon au moins l'une des revendications 1 à 3, **caractérisé en ce que** la commande de la température de la paroi du four des zones individuelles se fait, manuellement ou par l'intermédiaire d'un programme d'ordinateur, par la modification de la quantité de milieu de chauffage pour les brûleurs des chambres de combustion individuelles.

5. Procédé selon au moins l'une des revendications 1 à 4, **caractérisé en ce que** le spath fluor est chauffé à une température de 350 à 450°C et l'acide sulfurique à une température de 80 à 180°C, **en ce qu'**ils sont alors mélangés dans une vis de mélange et **en ce qu'**il sont ensuite injectés dans le four tubulaire rotatif.

6. Procédé selon la revendication 5, **caractérisé en ce que** 20-100% de l'acide sulfurique sont directement introduits dans la zone 1 du four.

7. Procédé selon la revendication 5, **caractérisé en ce que** 30-60% de l'acide sulfurique sont introduits directement dans la zone 1 du four.

8. Procédé selon au moins l'une des revendications 1 à 5, **caractérisé en ce que** le brûleur pour les chambres de combustion est opéré à l'aide de gaz naturel ou de pétrole.
